# EUROPEAN PATENT APPLICATION

(11) **EP 1 491 802 A1**
(43) Date of publication of application: **29.12.2004**
(21) Application number: 04014640.9
(22) Date of filing: 22.06.2004
(51) Int. Cl.: F16K 5/06

(54) **Valve**

(30) Priority: 24.06.2003 SE 0301867
(71) Applicant: ARMATEC AB, 400 91 Göteborg (SE)
(72) Inventor: Seborn, Bo, SE-436 40 Askim (SE)
(74) Representative: Kraenzmer, Martin

(57) **Abstract**

The present invention relates to a valve (1) comprising a valve body (3) with an inlet and an outlet, a shut-off device (13) with a flow duct (31), a seat seal (15) which is arranged for sealing between the shut-off device (13) and the valve body (3), and an abutment element (17) allowing the shut-off device (13) to abut against the seat seal (15). In the valve (1), said shut-off device (13) is operable between a first and a second position, in which first position the shut-off device (13) closes the flow path between the inlet and the outlet, and in which second position the flow duct (31) of the shut-off device (13) constitutes a first flow path between the inlet and the outlet through said flow duct (31). Furthermore the shut-off device (13) has a lateral duct (43) which on one side opens in the flow duct (31) and, on the other side opens in the circumferential surface of the shut-off device (13), the lateral duct (43) in said second position constituting a second flow path between the inlet and the outlet, which second flow path is parallel to the first flow path.

## Description

### Field of the Invention

The present invention relates to a valve comprising a valve body with an inlet and an outlet, a shut-off device with a flow duct, a seat seal which is arranged to seal between the shut-off device and the valve body, and an abutment element allowing the shut-off device to abut against the seat seal. Furthermore said shut-off device is operable between a first and a second position, in which first position the shut-off device closes the flow path between the inlet and the outlet, and in which second position the flow duct of the shut-off device constitutes a first flow path between the inlet and the outlet through said flow duct.

### Background Art

Valves are used, among other things, as shut-off valves for shutting off and opening a flow, for example, in a conduit. An example of such a shut-off valve is a ball valve. These ball valves can be used in conveyance of different types of substances, such as gases, liquids and solid materials.

As a rule, ball valves are arranged with a first sealing seat and a second sealing seat, between which an essentially spherical shut-off device is arranged, comprising a through duct. Furthermore the shut-off device, the first sealing seat and the second sealing seat are arranged in a valve body. The shut-off device is operated between a closed and an open position by an operating means arranged outside the valve body, said operating means being connected to the shut-off device by means of what is referred to as a spindle. When the valve is open or closed, an enclosed volume forms between the sealing seats, the shut-off device and the valve body, which enclosed volume is separated from contact with the inlet and outlet of the valve, whether the valve is open or closed.

In these ball valves, there is a special problem involving that the substance that is to be conveyed through the valve may enter the enclosed volume in the course of the opening and closing of the valve. This occurs when the openings of the duct arranged through the shut-off device pass the sealing seats when the shut-off device is turned between the closed position, in which the openings of the duct are oriented inwards to the enclosed volume, and the open position, in which the openings of the duct are oriented towards the inlet and outlet, respectively, of the valve. As the openings of the ducts pass the sealing seats, an opening arises between the enclosed volume and the inlet and outlet, respectively, of the valve via an interspace between the openings of the duct and the sealing seats. In this position, the duct arranged through the shut-off device partly communicates with the inlet and outlet of the valve, the substance which is to be conveyed through the valve flowing through the valve while at the same time it is possible for the conveyed substance to enter the enclosed volume. When the valve has been fully opened, the entire openings of the duct are in contact with the inlet and outlet, respectively, of the valve and, when the valve has been fully closed, the entire openings are in contact with the enclosed volume. In the fully open and fully closed position, the opening of the enclosed volume is closed again, whereby the substance that has entered the enclosed volume is trapped.

In some applications, such as in foodstuff processes, the substance that has entered the enclosed volume is of such a character that after a while it deteriorates in terms of quality and, thus, constitutes a contaminant. Contaminants in a valve may cause much maintenance work and/or the substance conveyed through the valve to be contaminated or destroyed, which may result in extensive damage and costs.

Another problem that may arise with these substances that are trapped in the enclosed volume is that after a while they may constitute contaminants which cause clogging of the valve and/or increased mechanical wear to the valve, which may cause, for instance, damaged sealing surfaces.

To eliminate and prevent problems with such contaminants, there is a need for ball valves and pipings to be cleaned at regular intervals in order to function in a satisfactory manner. The intervals between cleaning operations vary according to, for instance, type of valve, quality of the valve and field of application. Cleaning is usually performed by flushing the piping and the valve simultaneously. Since in such cleaning it will not be possible to reach the enclosed volume outside the shut-off device, there are valves provided with connections that are intended to be used in order to connect equipment for flushing of the enclosed volume. Alternatively, the valve can be cleaned by being dismounted. Consequently, cleaning requires great resources and special equipment.

Starting from the problems described above, there is a need for valves, especially ball valves, which are easy to clean and maintain and also inexpensive to produce.

### Summary of the Invention

An object of the present invention is to provide a valve, such as a ball valve for use as a shut-off valve, which in the mounted position can easily be cleaned internally.

Another object of the present invention is to provide a valve which is self-cleaning in operation.

One more object of the present invention is to provide a valve which is inexpensive to manufacture.

The above objects and other objects that will be evident from the following description are achieved by a valve according to the appended claims.

The invention is based on the knowledge that it is not possible to provide a ball valve without enclosed volumes.

According to one aspect of the present invention, a valve is provided, comprising a valve body with an inlet and an outlet, a shut-off device with a flow duct, a seat seal which is arranged to seal between the shut-off device and the valve body, and an abutment element allowing the shut-off device to abut against the seat seal, said shut-off device being operable between a first and a second position, in which first position the shut-off device closes the flow path between the inlet and the outlet, and in which second position the flow duct of the shut-off device constitutes a first flow path between the inlet and the outlet through said flow duct, wherein the shut-off device has a lateral duct which on one side opens in the flow duct and on the other side opens in the circumferential surface of the shut-off device, in said second position the lateral duct constituting a second flow path between the inlet and the outlet, which second flow path is parallel to the first flow path.

In the first position of the valve, the valve is fully closed, i.e. all flow paths are shut off. In the second position of the valve, the valve is open to be flown through along at least two different paths. In this second position, there are parallel flows, on the one hand directly through the flow duct of the shut-off device and, on the other hand, through the circumferential of the shut-off device and the lateral duct and the flow duct of the shut-off device. In this manner, a valve is thus provided, which reduces the risk of collecting stationary substances by the inner volumes of the valve being accessible both in operation and when the valve is closed.

In one embodiment of the present invention, a valve is provided, which has a third position, in which the flow duct and the lateral duct of the shut-off device are arranged in series and form a third flow path between the inlet and the outlet.

In the third position of the valve, the entire valve is flown through, the entire flow preferably passing the outside of the circumferential surface of the shut-off device, and moreover the flow is preferably divided in the flow duct and then flows into the lateral duct. The flow duct and the lateral duct are flown through in series, i.e. first the entire flow passing through the valve, in the third position, flows through the two openings of the flow duct so as then to flow into the lateral duct and out through the opening of the lateral duct at the circumferential surface of the shut-off device. The valve can be flown through in both directions, which means that the discussion above is reversible.

The lateral duct is preferably directed perpendicular to the flow duct. It should be noted that the lateral duct can also be directed in other ways to achieve the function of connecting the circumferential surface of the shut-off device to the flow duct.

In one embodiment of the present invention, the abutment element of the valve consists of a second seat seal with a centre hole, which seat seal is arranged with permeability in the area between the valve body and the sealing surface against the shut-off device, the permeability consisting of at least one transmission duct.

Such permeability can be designed in several ways for the purpose of providing a flow on the outside of the circumferential surface of the shut-off device, in the second as well as the third position of the valve. In the second position of the valve, the lateral duct of the shut-off device is flown through via the transmission duct, and in the third position of the valve the flow duct of the shut-off device is flown through via the transmission duct.

In one embodiment of the present invention, the outlet and inlet of the valve, in said second position, communicate with each other through the centre hole as well as the transmission duct which are arranged in the abutment element.

In this way, the centre hole constitutes a first flow path and the transmission duct constitutes a second flow path through the valve. In this embodiment, the first and the second flow path are combined in the flow duct of the shut-off device.

In one embodiment of the present invention, the outlet and inlet of the valve, in said third position, communicate with each other through the transmission duct arranged in the abutment element, and the centre hole of the abutment element is closed by means of the shut-off device.

Said transmission duct can be designed as one or more ducts in the abutment element, but it could also consist of a duct formed in the valve body beyond the abutment element.

In one embodiment of the present invention, said shut-off device is essentially spherical, said abutment element is circular and said transmission duct consists of holes arranged at a distance from the centre between the sealing surface of the abutment element and the circumferential surface of the abutment element.

In this embodiment, the transmission duct consists of several holes which are uniformly distributed round the circular abutment element. The holes can also be irregularly placed round the abutment element, for instance in order to cooperate with the openings of the shut-off device, i.e. the openings of the flow duct and the lateral duct respectively. In this manner, the flow and the cleaning effect of the valve can be controlled through its construction.

In one embodiment of the present invention, all fluid passing through the valve in operation, in said third position, flows through the volume defined by the space between the sealing seat ring, the permeable abutment element, the valve body and the shut-off device.

In this manner, the above-mentioned volume is flushed clean simultaneously with the flow duct and the lateral duct of the valve and also the inlet and outlet of the valve.

In one embodiment of the present invention, said shut-off device is rotatable from the open second position through essentially 90° in one direction to the closed first position, and the shut-off device is rotatable through essentially 90° in the other direction from the open second position to said third position for internal cleaning of the valve.

According to other aspects of the invention, the above-mentioned rotations through 90° are formed as rotations through other angles. The valve is kept clean also in said second position by stationary pockets or ducts being excluded since the entire valve is accessible to be flown through in the second position of the valve, which preferably is used as the operating position.

### Brief Description of the Drawings

The invention will now be described in more detail with reference to the accompanying schematic drawings which by way of example illustrate currently preferred embodiments of the invention.
Fig. 1 is a schematic exploded view in perspective of a valve according to an embodiment of the invention.
Fig. 2 is a schematic top plan view in cross-section of the valve according to Fig. 1 in a closed position.
Fig. 3 is a schematic top plan view in cross-section of the valve according to Fig. 1 in an operating position.
Fig. 4a is schematic top plan view in cross-section of the valve according to Fig. 1 in a cleaning position.
Fig. 4b is schematic partial view in cross-section of the valve according to Fig. 4a in the cleaning position.

### Description of Preferred Embodiments

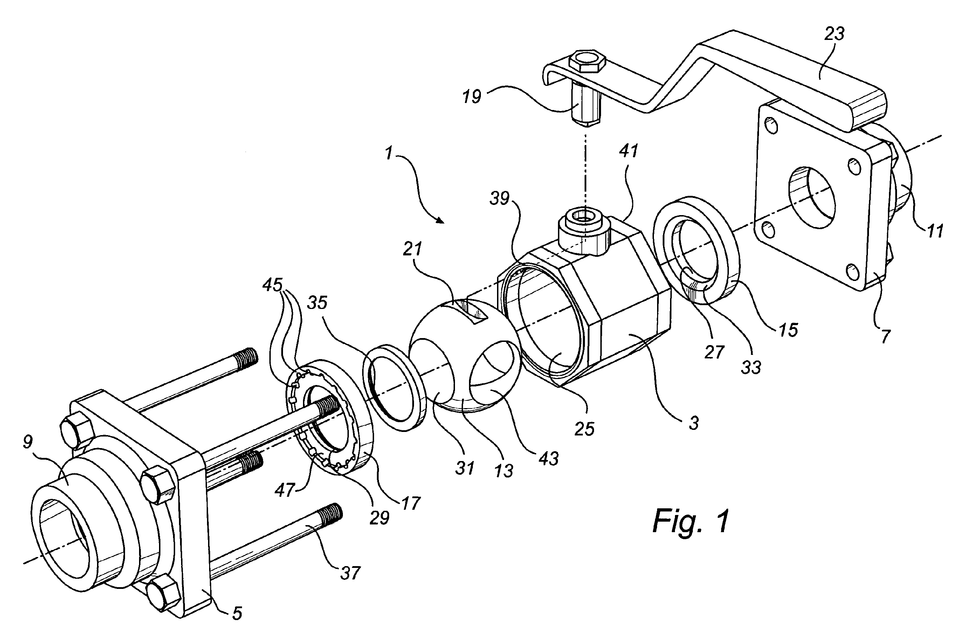

Fig. 1 is a schematic exploded view in perspective of a valve 1 comprising a valve body 3, a first and a second valve body end piece 5, 7, a first and a second pipe connection 9, 11 adapted to constitute an inlet and an outlet, respectively, of the valve 1, a shut-off device 13, a sealing seat seal 15, and a permeable seat seal 17. Moreover the valve 1 comprises a spindle 19 engaging the shut-off device 13 to allow operation of the same. The shut-off device 13 is formed with a slot 21, in which the spindle 19 engages to allow turnable operation of the shut-off device 13. One end of the spindle 19 is directed away from the shut-off device 13 adapted to be connected to an operating means 23, such as a mechanical arm for manual operation or a motor drive for automated operation (not shown).

The shut-off device 13 is arranged inside the valve body 3 between the sealing seat seal 15 and the permeable seat seal 17, said seat seals 15, 17 being pressed against the shut-off device 13 when the seat seals 15, 17 and the shut-off device 13 are arranged in the valve body 3. In the embodiment illustrated, the valve body 3 is formed with a through circular duct 25. Moreover, in the embodiment illustrated, the outer diameter of the seat seals 15, 17 is preferably slightly greater than the outer diameter of the shut-off device 13, the through circular duct 25 in the valve body 3 having at its ends essentially the same diameter as the seat rings to provide good guiding thereof in the radial direction. It is also possible to form the shut-off device 13 and the seat seals 15, 17 with greater differences between the outer diameters, in which case the through circular duct 25 of the valve body 3 is designed correspondingly to provide good guiding of the seat seals 15, 17. The seat seals 15, 17 and the shut-off device 13 have together, in the mounted position, essentially the same length as the valve body 3. By the seat seals 15, 17 applying a pressure to the shut-off device 13, a force is produced, which makes the shut-off device 30 fit tightly against the seat seals 15, 17.

The seat seals 15, 17 are formed with a circular centre hole 27, 29, which centre holes 27, 29 have a diameter which is preferably the same as, or greater than, the diameter of a flow duct 31 arranged in the shut-off device 13. Moreover, the seat seals 15, 17 are preferably made of metal, such as stainless steel, or of polymer material, such as Teflon. The material is selected according to the field of application for the valve 1.

The seat seals 15, 17 are provided with abutment surfaces 33, 35 against the shut-off device 13, which abutment surfaces 33, 35 are preferably made of low friction material to make the shut-off device 13 easy to operate. The material of the abutment surfaces 33, 35 is preferably also elastic so as to be resilient when the seat seals are pressed against the shut-off device, thereby achieving a good sealing effect. Preferably, the abutment surfaces 33, 35 are made of polymer material, such as Teflon. The abutment surfaces 33, 35 are preferably formed as inserts in the seat seals 15, 17 if the seat seals 15, 17 beyond the abutment surfaces 33, 35 are made of metal.

The seat seals 15, 17 are kept in place in the valve body 3 by the end pieces 5, 7 of the valve body being pressed against the associated seat seal 15, 17 in the mounted position. This is provided, for example, by through bolts 37 which connect the two end pieces 5, 7, the end pieces 5, 7, when tightening the bolts 37, being pulled towards each other and consequently pressed against the associated seat seal 15, 17 which in turn is pressed against the shut-off device 13. The end pieces 5, 7 of the valve can also be threaded directly in the valve body 3 with a pressing fit against the seat seals 15, 17.

Seals 39, 41 are arranged between the end pieces 5, 7 of the valve body 3 and each end of the valve body 3 to make the transitions between the end pieces 5, 7 and the valve body 3 essentially tight. The seals 39, 41 are preferably arranged as circular rings recessed as inserts in a groove arranged at the respective ends of the valve body 3. Furthermore the seals 39, 41 are preferably made of an elastic material, such as Teflon. It should be noted that the sealing rings 39, 41 can be arranged in various ways with the effect maintained. For example, the sealing rings 39, 41 can instead be arranged in the respective end pieces 5, 7, and the shape and material of the seals 39, 41 can be varied, without affecting the function.

The end pieces 5, 7 of the valve body 3 are preferably arranged with pipe connections 9, 11. The pipe connections 9, 11 can be designed in various ways, where methods normally used to connect a pipe to a connecting device are applied. Further the pipe connections 9, 11 can be formed either in one piece with the end piece 5, 7 or as loose inserts that are mounted in the end piece 5, 7. An advantage of using loose inserts is that the pipe connection 9, 11 can be varied for one and the same end piece 5, 7 according to the type of connection that is desired.

The shut-off device 13 is, in addition to the flow duct 31, arranged with a lateral duct 43 whose first opening opens in the flow duct 31 and whose second opening opens in the circumferential surface of the shut-off device 13. The flow duct 31 and the lateral duct 43 thus form together a T-shaped duct inside the shut-off device 13. Moreover the permeable seat seal 17 is formed with transmission holes 45 arranged at a distance from the centre between the circular circumferential surface of the seat seal and the abutment surface 35 thereof against the shut-off device 13. On the side of the permeable seat seal 17 directed away from the valve 1, a recess 47 is preferably arranged to increase the space between the end piece 5 of the valve and the transmission holes 45 arranged in the permeable seat seal 17. The recess 47 allows the substance that is to be conveyed through the valve 1 to flow more easily through the transmission holes 45 arranged in the permeable seat seal 17.

The transmission holes 45 and the lateral duct 43 of the permeable seat seal 17 allow that the substance that is to be conveyed through the valve 1, in the openposition of the valve, flows both through the flow duct 31 arranged through the shut-off device 13 and through the lateral duct 43 via the outside of the shut-off device 13, said ducts 31, 43 in this open position constituting parallel flow paths that combine in the flow duct 31. In this way, a valve is obtained, which does not have any enclosed volumes, thereby reducing the risk of collecting the conveyed substance and forming contaminants.

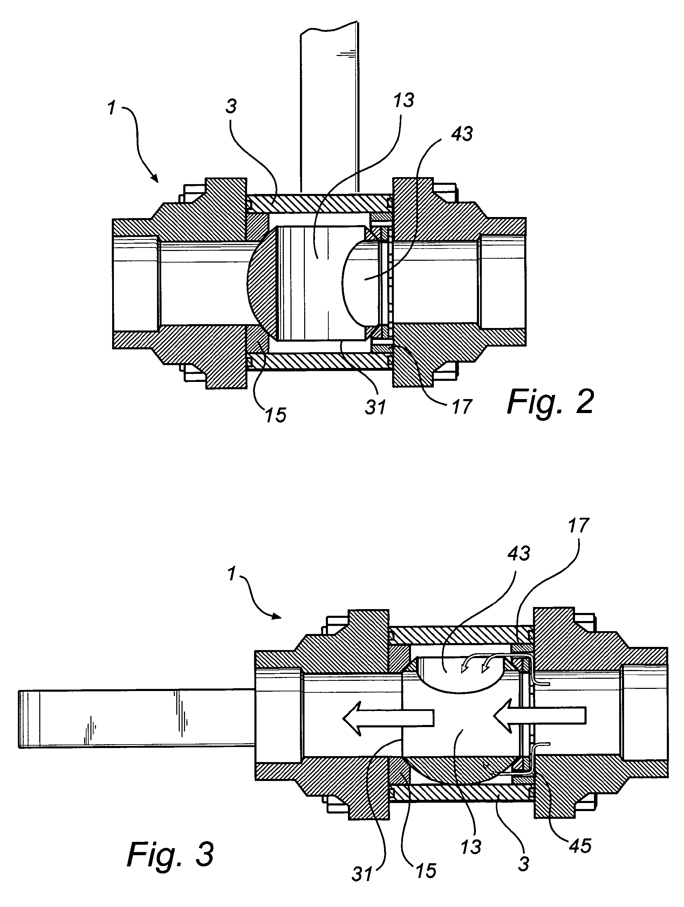

Figs 2-4 illustrate three different positions of the valve 1 depending on how the shut-off device 13 is oriented in the valve body 3, which orientation can be set by rotating the spindle 19 arranged in engagement with the shut-off device 13.

Fig. 2 illustrates a closed position, in which the valve 1 is closed and no substance can be conveyed through the valve 1. This closed position is provided by the flow duct 31 being oriented so that at least the inlet or outlet of the valve 1 is closed by the shut-off device 13 and the lateral duct 43 simultaneously being oriented so as to be essentially directed towards the permeable seat seal 17. In this position, a non-permeable side of the shut-off device 13 will sealingly abut against the sealing seat seal 15, and no conveyed substance is allowed to flow through the valve 1.

Fig. 3 illustrates an operating position, in which the valve 1 is open and the substance that is intended to be conveyed through the valve 1 is allowed to flow through the valve 1. In this operating position, the shut-off device 13 is preferably rotated through 90° from the closed position. This operating position is provided by the flow duct 31 of the shut-off device being in direct contact with the inlet and outlet, respectively, of the valve 1. Moreover, the lateral duct 43 of the shut-off device 13 communicates with the transmission holes 45 arranged in the permeable seat seal 17. The flow duct 31 and the lateral duct 43 combine inside the shut-off device 13, all substance intended to be conveyed through the valve 1 flowing through the opening of the flow duct 31 which is directed towards the sealing seat seal 15. As a result, the substance that is intended to be conveyed through the valve 1 in this operating position partially flows parallel through the flow duct 31 and the lateral duct 43. In this operating position, the conveyed substance through the valve 1 will thus flow both through the flow duct 31 and through the volume formed by the seat seals 15, 17, the shut-off device 13 and the valve body 3. In this way, a valve 1 without enclosed volume is obtained, thereby reducing the risk of collecting conveyed substance and thus forming contaminants, and also simplifying the cleaning of the valve 1. Preferably, the valve 1 is arranged in such a manner that the flow through the valve 1 occurs away from the permeable seat seal 17 towards the sealing seat seal 15, the reverse flow path also being possible.

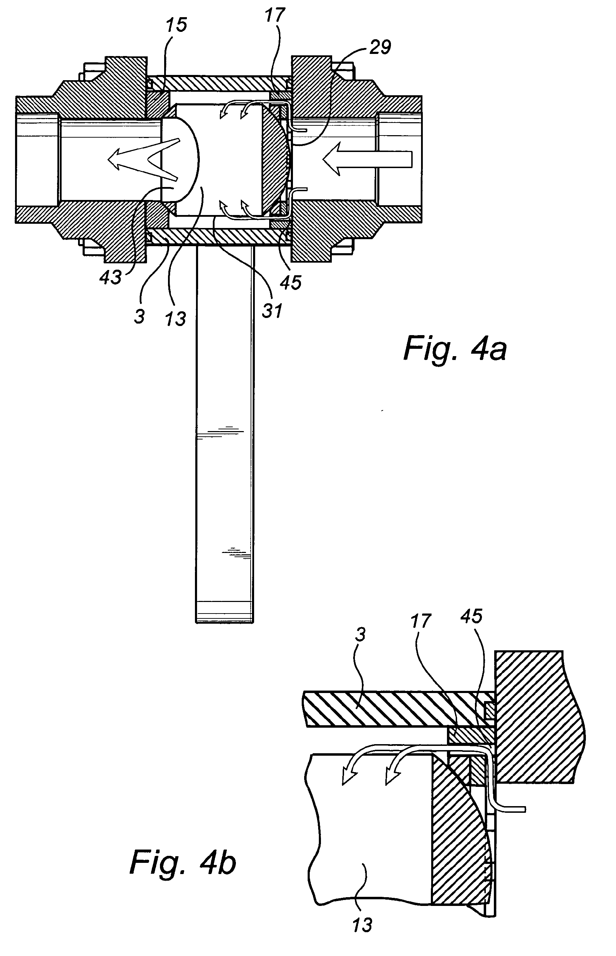

Figs 4a and 4b illustrate a cleaning position, in which the valve 1 is open to be flown through between the inlet and outlet of the valve. In this cleaning position, the shut-off device 13 is preferably rotated through 90° from the closed position, in the direction opposite to the rotation when the valve is moved to the operating position, and thus through 180° from the operating position. This cleaning position is provided by the flow duct 31 being oriented so as to extend rotated through essentially 90° relative to the inlet and outlet of the valve, the openings of the flow duct 31 being in contact with the space formed between the seat seals 15, 17, the shut-off device 13 and the valve body 3. Furthermore, the opening of the lateral duct 43 in the circumferential surface of the shut-off device 13 is oriented so as to be directed towards the sealing seat seal 15. This cleaning position consequently implies that the centre hole 29 of the permeable seat seal 17 is closed by means of the shut-off device 13, all conveyed cleaning fluid through the valve 1 flowing through the transmission holes 45 in the permeable seat seal 17. By essentially all flowing occurring through the transmission holes 45 in the permeable seat seal 17, the cleaning fluid conveyed through the valve 1 will pass the outside of the shut-off device 13 and, thus, clean the space on the outside of the shut-off device. The cleaning fluid also flows through the flow duct 31 and the lateral duct 43, which in this position is arranged in series with the flow duct 31. By the cleaning fluid flowing from the outside of the shut-off device 13 and through its inner ducts 43, all inner volumes of the valve 1 are accessible for cleaning. In the cleaning position, the valve 1 is preferably arranged so that the flowing through the valve 1 occurs in the direction from the permeable seat seal 17 towards the sealing seat seal 15, also the reverse flow path being possible.

It should be noted that the cleaning position can also be used as an operating position in the cases where the transmission holes 45 arranged in the permeable seat seal 17 are large enough to prevent excessive pressure drops. In the case where the cleaning position is used also as an operating position, the risk of conveyed substance collecting and contaminants forming in the valve is reduced, since no enclosed volumes are allowed.

## Claims

1. A valve (1) comprising a valve body (3) with an inlet and an outlet, a shut-off device (13) with a flow duct (31), a seat seal (15) which is arranged to seal between the shut-off device (13) and the valve body (3), and an abutment element (17) allowing the shut-off device (13) to abut against the seat seal (15), said shut-off device (13) being operable between a first and a second position, in which first position the shut-off device (13) closes the flow path between the inlet and the outlet, and in which second position the flow duct (31) of the shut-off device (13) constitutes a first flow path between the inlet and the outlet through said flow duct (31) ,
**characterised in**
**that** the shut-off device (13) has a lateral duct (43) which on one side opens in the flow duct (31) and on the other side opens in the circumferential surface of the shut-off device (13), the lateral duct (43) in said second position constituting a second flow path between the inlet and the outlet, which second flow path is parallel to the first flow path, said abutment element (17) consisting of a second seal seat with a centre hole (29), said seat seal (17) being arranged with permeability in the area between the valve body (3) and a sealing surface (35) against the shut-off device (13), permeability being provided by at least one transmission duct (45).

2. A valve (1) as claimed in claim 1, wherein said valve (1) has a third position, in which the flow duct (31) and the lateral duct (43) of the shut-off device (13) are arranged in series and form a third flow path between the inlet and the outlet.

3. A valve (1) as claimed in claim 1, wherein the outlet and inlet of the valve (1), in said second position, communicate with each other through the centre hole (29) as well as the transmission duct (45) arranged in the abutment element (17).

4. A valve (1) as claimed in claim 1 or 3, wherein the outlet and inlet of the valve (1), in said third position, communicate with each other through the transmission duct (45) arranged in the abutment element (17), and wherein the centre hole (29) of the abutment element (17) is closed by means of the shut-off device (13).

5. A valve (1) as claimed in any one of claims 1, 3 and 4, wherein said abutment element (17) is circular and said transmission duct (45) consists of holes arranged at a distance from the centre between the sealing surface (35) of the abutment element (17) and the circumferential surface of the abutment element (17).

6. A valve (1) as claimed in any one of claims 2-5, wherein all fluid flowing through the valve (1) in operation, in said third position, flows through the volume defined by the space between the sealing seat ring (15), the permeable abutment element (17), the valve body (3) and the shut-off device (13).

7. A valve (1) as claimed in any one of the preceding claims, wherein the shut-off device (13) is essentially spherical.

8. A valve (1) as claimed in any one of claims 2-7, wherein said shut-off device (13) is rotatable from the open second position through essentially 90° in one direction to the closed first position, and wherein the shut-off device (13) is rotatable through essentially 90° in the other direction from the open second position to said third position for cleaning of the valve (1).
